# EUROPEAN PATENT SPECIFICATION

(11) **EP 2 554 374 B1**
(45) Date of publication and mention of the grant of the patent: **16.03.2016**
(21) Application number: 11176148.2
(22) Date of filing: 01.08.2011
(51) Int. Cl.: B32B 27/32, B65D 65/40

(54) **A multilayer film, packages comprising the multilayer film, and processes for making**
Mehrschichtige Folie, Verpackungen mit der mehrschichtigen Folie und Herstellungsverfahren dafür
Film multicouche, paquets comportant le film multicouche et procédés de fabrication

(43) Date of publication of application: 06.02.2013
(73) Proprietor: The Procter & Gamble Company, Cincinnati, OH 45202 (US)
(72) Inventor: Remus, Michael, 69121 Heidelberg (DE); Sasoglu, Fadil Mert, 1000 Brussels (BE)
(74) Representative: Siddiquee, Sanaul Kabir

(56) References cited:
- EP-A1- 1 488 924
- EP-A1- 1 736 309
- WO-A1-01/60909
- JP-A- 2008 230 658
- US-A- 4 394 955
- US-A1- 2003 207 137
- US-A1- 2006 147 663
- BOREALIS: "Borpact BC918CF", 20071122, 22 November 2007 (2007-11-22), pages 1-3, XP007919875,

## Description

### FIELD OF THE INVENTION

The present invention relates to multilayer films, and packaging comprising multilayer films, as well as processes for making such packages.

### BACKGROUND OF THE INVENTION

Multilayer films are widely used for packaging applications, including for household products such as liquid laundry compositions, powder laundry compositions, hard surface cleaners, personal care products, diapers, wet wipes, and pet foods. Such multilayer films have to be able to form strong seals during package making. They also need to be formable into packages that are aesthetically pleasing, with little discoloration or surface deformations, including in the seal regions.

Multilayer films for use in such packaging applications typically incorporate a sealing layer that is capable of forming a bond having high seal strength. Such sealing layers typically comprise a polyolefin such as polyethylene, having a relatively low melt point. The seal is formed by fusing together the sealing layers of two pieces of multilayer film, comprising said sealing layers.

The multilayer film usually also includes a structural layer (30). In order to provide integrity to the seal, the structural layer (30) typically includes a high melting point polymer, such as polypropylene or polyethylene terephthalate (PET), which does not melt at the temperature at which the seal is formed. The structural layer (30) prevents seal thinning or film perforation during sealing, and hence also ensures that the package does not leak during use. While the multilayer film can consist of a sealing layer and a structural layer, films comprising three or five layers are more typical, with the structural layer (30) being in the middle.

The seal is usually formed by positioning the sections of multilayer film to be joined, such that the sealing layers from the two sections of film are in contact. Pressure and sufficient heat is then applied to the outer layers of the films, in order to fuse the respective sealing layers together. As such, the heat to fuse the sealing layers has to be applied through the structural layer (30). Since the structural layer (30) is typically a polymeric material that does not melt during seal forming, heat transfer through the structural layer (30) is poor. Therefore, a high temperature has to be applied to the outer layers, in order to provide sufficient heat transfer to fuse the sealing layers together. This can result in discoloration or deformation of the outer layers of the film. This is particularly a problem where heat transfer and melting has to be rapid, for instance when forming vertical edge overlap seals, or when sealing more than two layers together, for instance when forming closed gusset seals that combine four layers of multilayer film together.

In addition, since structural layers of the prior art, such as those that comprise PET, form a significant barrier to heat transfer, they increase the time required for the sealing layer to reach a temperature at which a seal can be formed. Hence, they limit the speed at which packaging lines can run.

Therefore, a need remains for a multilayer film that can be sealed together at lower temperatures, to form a package without discolouring or deforming the seal regions, and that enables seals to be formed at higher speeds.

Heterophasic polymers are disclosed in EP 2 143 760 A1, EP 2 275 485 A1, EP 2 182 030 A1, US 6,723,829 B1, US 7,473,463 B2, EP 2 154 195 A1, EP 2 145 923 A1, EP 2 133 389 A1, and EP 1 661 935. Coextruded multilayer films and processes for fabricating packages comprising said multilayer films are disclosed in US 2002/0009579 A1, US 2003/0211350 A1, WO 2010/008696, US 6,237,308 B1, US 7,588,706 B2, US 6,794,053 B2, WO 2009/110887 A1, WO 01/03921 A1, WO 2004/094141 A2, WO 98/32596, WO 95/26269, US 2007/0254119 A1, WO 97/44178, US 2008/0299364 A1, US 2006/0131778 A1, and US 2007/0252276 A1.

JP2008230658 A relates to an easily openable gusset bag of a four-corner seal type that can be torn and opened from the upper end margin along an opening perforation and can be easily opened by peeling the gusset portion after the arrival of the opening at a hot melt bonded part of the side end margin to form a beautiful opened mouth.

US 4394955 A relates to a recloseable bag which is provided with a lip projection above the bag mouth and carries a bendable retaining strip with opposite end tab extensions projecting into overhanging relation to clearance indentations in the side edges of the bag extending from adjacent to the lower edge of the lip portion downwardly to a substantial distance below the bag mouth opening so that the lip portion is adapted to be folded down over and into closing relation to the bag mouth opening and the tab extensions adapted to be bent over to maintain the bag closed. The bag may be provided with gussets in the bottom to provide a spreadable base under bag content load for supporting the loaded bag in upright position.

### SUMMARY OF THE INVENTION

The present invention relates to a package (100) comprising the multilayer film (10), wherein the package (100) comprises at least one seal formed from fusing together the first sealing layer (20) of two sections of the multilayer film (10), the multilayer film (10) comprises a second sealing layer (40), such that the first sealing layer (20) and second sealing layer (40) form the outer layers of the multilayer film (10), and the seal is a gusset seal, formed from combining at least four layers of the multilayer film (10). The multilayer film (10) comprises: an outer layer consisting of a first sealing layer (20), the first sealing layer (20) comprising a polyolefin; and a structural layer (30), comprising a matrix phase and a dispersed phase; characterized in that: the dispersed phase comprises a heterophasic copolymer; and the structural layer (30) has a thickness of from 6 microns to 120 microns.

The present invention also relates to a process for making the package (100), wherein the process comprises the steps of: taking a first section of multilayer film (10) and a second section of multilayer film (10); contacting the first sealing layer (20) of the first section of multilayer film (10) with the first sealing layer (20) of the second section of multilayer film (10); applying a heat source to the first section of multilayer film (10) and second section of multilayer film (10), to fuse the first sealing layer (20) of the first section of multilayer film (10) with the first sealing layer (20) of the second section of multilayer film (10), to form a seal; characterized in that the heat source is at a temperature of from 160 °C to 300 °C.

### BRIEF DESCRIPTION OF THE DRAWINGS

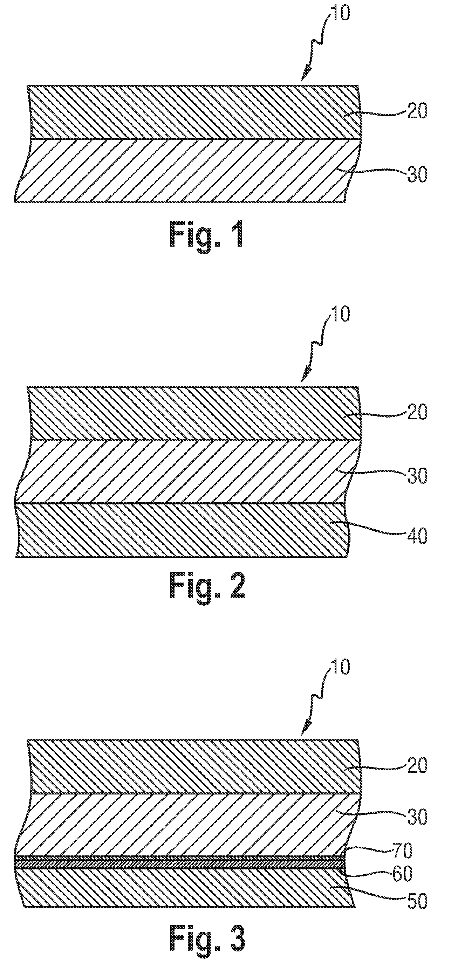

Figure 1: a multilayer film (10) according to the present invention, comprising a first sealing layer (20) and a structural layer (30).
Figure 2: a multilayer film (10) according to the present invention, comprising a first sealing layer (20), a structural layer (30), and a second sealing layer (40).
Figure 3: a multilayer film (10) according to the present invention, comprising a first sealing layer (20) and a structural layer (30), further comprising an additional lamination layer (50) with a reverse print layer (60), which is extrusion laminated to the structural layer (30) using a tie-layer (70).

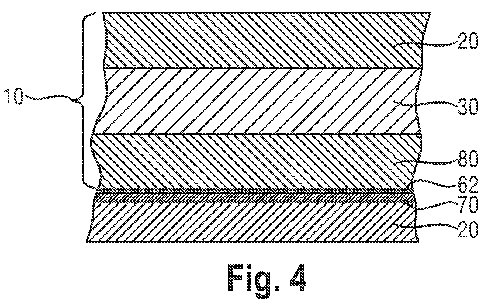

Figure 4: a multilayer film (10) according to the present invention, comprising a first sealing layer (20), a structural layer (30), and a printing layer (80) that are coextruded together. A print layer (62) is printed onto the printing layer (80), before a lamination layer (50) is bonded to the printing layer (80) using an adhesive tie-layer (70).

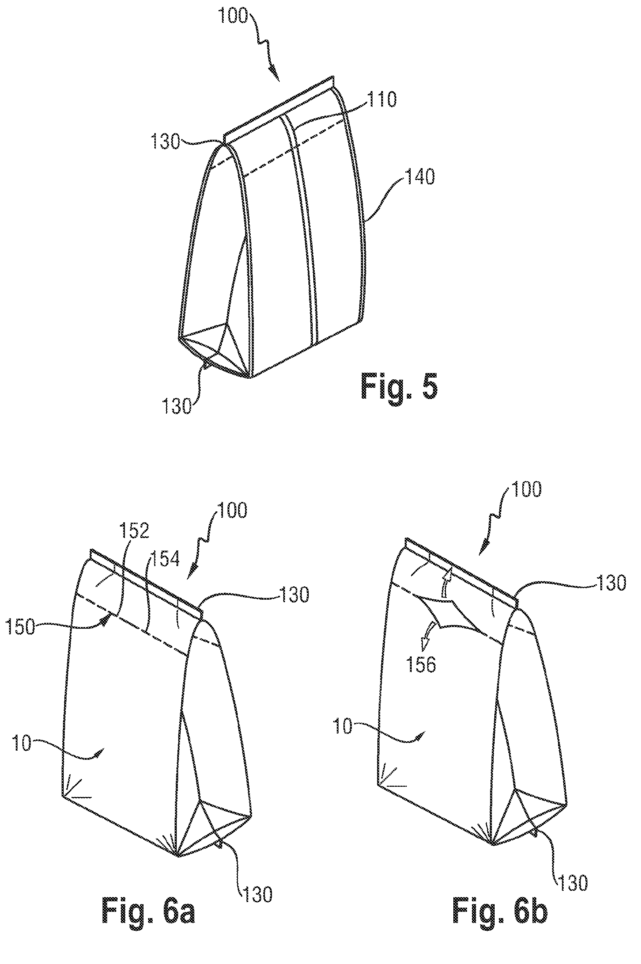

Figure 5: a package (100) of the present invention, having closed gusset seals (130) at both the top and bottom of the package (100), a vertical form seal (110) on the rear face, with a line of weakness to provide easy opening (150), and vertical corner seals (140).
Figure 6a: a package (100) of the present invention, having closed gusset seals (130) at both the top and bottom of the package (100), with a line of weakness (150) to provide easy opening.
Figure 6b: The package (100) of figure 6a, with the line of weakness (150) being partially opened.

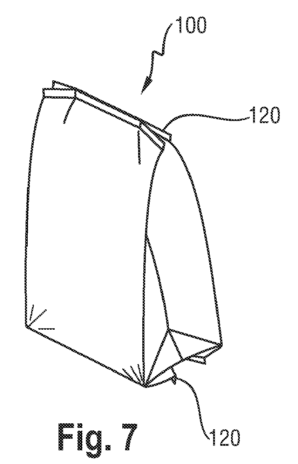

Figure 7: a package (100) of the present invention, having open gusset seals (120) at both the top and bottom of the package (100).

### DETAILED DESCRIPTION OF THE INVENTION

The first sealing layer (20) of the multilayer film (10) can be fused together to form a seal at lower applied temperatures. This is because heat transfer through the structural layer (20) is more rapid than with multilayer films of the prior art, such as those that comprise PET in the structural layer. In addition, the rapid heat transfer through the structural layer (20) enables the first sealing layer (20) to more quickly reach the melt temperature. Therefore, the seals can be formed in shorter times, and hence at faster packaging line speeds.

As used herein, the term "polymer" may be used to refer to homopolymers, copolymers, interpolymers, terpolymers, etc.

As used herein, "substantially free" is defined to mean that the referenced film layer is either completely free of the particular component, or comprises small amounts of the component that are present as a result of raw material impurities, film processing aids, and recycling of film trimmings and scraps.

The term "incompatible polymers" is used herein to refer to two or more polymers which are at least partially immiscible, and in some instances wholly immiscible.

As used herein, the phrase "machine direction" refers to a direction "along the length" of the film, i.e., in the direction of the film as the film is formed during extrusion and/or coating, or during package making. As used herein, the phrase "transverse direction" refers to a direction across the film, perpendicular to the machine or longitudinal direction.

As used herein, the term "matrix" or "matrix phase" refers to a continuous polymer phase in which an isolated or discrete "dispersed phase" may be dispersed.

As used herein, a phase is a region that has either a different composition, or a different morphology from the adjacent region.

As used herein, homopolymer refers to polymers comprising at least 97 %, preferably at least 98 %, even more preferably at least 99 %, most preferably 99.8 % by weight of one monomer unit.

### 1) Multilayer film:

The multilayer film (10) comprises a structural layer (30), and a first sealing layer (20), wherein the first sealing layer (20) forms one of the outer layers of the multilayer film (10). When the multilayer film (10) consists of two layers, the structural layer (30) forms the second outer layer of the multilayer film (10). More preferably, the second outer layer consists of a second sealing layer (40), or other functional layer to provide one or more benefits, including improved mechanical properties, improved barrier properties, improved print robustness, and mixtures thereof. Where the second outer layer is a second sealing layer (40), the structural layer (30) is interposed between the two sealing layers.

The multilayer film (10) is preferably formed by co-extruding the layers together. The multilayer films (10) can be co-extruded by any means known in the Art. However, film-blowing co-extrusion processes, such as disclosed in WO 97/44178 and US 2007/0254119 A1 are preferred. In such film-blowing co-extrusion processes, the layers of the multilayer film (10) are coextruded together through a coextrusion die orifice. The coextrusion die has multiple mandrels that feed the different melt streams that form the final layers of the multilayer film (10). The multilayer film (10) is then formed by blowing air into the internal bubble space formed by the blown multilayer film (10) between the coextrusion die orifice and the nip rolls. The nip rolls fold the multilayer film into two layers for later storage.

The multilayer film (10) may be uniaxially or biaxially oriented, for instance by stretching or pulling the film in one or more directions. This results in the long-axis of the polymers of the multilayer film having an increased orientation in the direction of stretching or pulling. Orientation by stretching or pulling in the direction of extrusion is known as machine direction orientation. Orientation by stretching or pulling perpendicular to the direction of extrusion is known as transverse direction orientation. Biaxial orientation may be sequential. For instance, orientation may be accomplished by stretching or pulling a film first in the machine direction followed by the transverse direction. Alternatively, simultaneous biaxial orientation may be preferred, depending upon the desired film features. Preferred orientation ratios, defined as the ratio of the degree of stretching in the machine direction vs. degree of stretching in the transverse direction, are typicaly from between three to six times in the machine direction and between four to ten times in the transverse direction. The orientation of blown films is typically controlled by setting the take up ratio and blow up ratio. The take up ratio is calculated by dividing the linear velocity ("take up" speed) of the multilayer film (10) after the nip rolls, by the linear velocity of the multilayer film tube leaving the die office. The blow up ratio is calculated by dividing the maximum diameter of the bubble, by the average diameter of the coextrusion die office.

Multilayer films (10) may also be oriented by a tenter frame process. As part of the tenter frame process, the multilayer film (10) is usually stretched in the machine direction via a series of heated rollers, and in the transverse direction via edge "tenter" grips that apply a transverse tension, until the required film dimensions are achieved. Alternatively, stretching in the machine direction can be achieved by increasing the machine direction spacing between the tenter grips, as in the LISIM Technology®.

One or both of the exposed surfaces of the outer layers of the multilayer film (10) may be surface-treated to render the treated exposed surface receptive to metallization, coatings, printing inks, and/or lamination. The surface treatment can be carried out according to one of the methods known in the art. Preferred methods include, but are not limited to, corona discharge, flame treatment, plasma treatment, chemical treatment, or treatment by means of a polarized flame.

One or both of the exposed surfaces of the outer layers of the multilayer film (10) may be metallised, for instance to reduce vapour or gas transfer through the multilayer film (10). Such layers may be metallised using conventional methods, such as vacuum deposition of a metal layer such as aluminum, copper, silver, chromium, or mixtures thereof. In one embodiment, the film is first surface treated to increase the surface energy before being metallised. When metalisation and an additional coating, such as a print, are applied together, either may be applied first, followed by the other.

### 1.1 The first sealing layer:

The first sealing layer (20) is one of the outer layers of the multilayer film (10) and is used to form a seal, when the multilayer film (10) is used to make a package. Preferably, the first sealing layer (20) comprises a polymer that has a reduced melting temperature as compared to polymers used in the structural layer (30). The first sealing layer (20) comprises a polyolefin, polyolefin copolymer, and mixtures thereof.

Examples of suitable polyolefins include metallocene-catalyzed polyolefins, Ziegler-Natta catalyzed polyolefins, and mixtures thereof. Preferably the first sealing layer (20) comprises a polyolefin selected from the group consisting of: polyethylene, polypropylene, and mixtures thereof. Preferably, the polyolefin is polyethylene. Suitable polyethylenes include: low density polyethylene (LDPE, having density range of from 0.910 g/cm³ to 0.924 g/cm³ at 21°C), linear low density polyethylene (LLDPE, having substantially no long chain branching), medium density polyethylene (MDPE, having density range of from 0.925 g/cm³ to 0.939 g/cm³ at 21°C), high density polyethylene (HDPE, having density range of from 0.940 g/cm³ to 0.965 g/cm³ at 21°C), and mixtures thereof. The first sealing layer (20) preferably comprises at least 60 %, more preferably at least 90 %, even more preferably at least 95 % by weight of the polyolefin. The first sealing layer (20) can also consist of 100% by weight of the polyolefin.

The first sealing layer (20) may also comprise a polyolefin copolymer. Polyolefin copolymers are polymers that comprise two or more different olefin species. Suitable polyolefin copolymers may be selected from the group consisting of: Ethylene-Propylene (EP) copolymer, Propylene-Butylene (PB) copolymer, Ethylene-Propylene-Butene (EPB) terpolymer, ethylene vinyl acetate, and mixtures thereof. If present, random copolymers having little or no blockiness are preferred.

The first sealing layer (20) may further comprise additives, such as, for example, anti-block agents, anti-static agents, slip agents, and combinations thereof.

The thickness of the first sealing layer (20) is typically in the range of from 8 microns to 55 microns, preferably from 10 microns to 45 microns, more preferably from 15 microns to 30 microns.

### 1.2 Structural layer:

The structural layer (30) of the multilayered film (10) provides structural integrity to the film during seal forming, and provides the resultant package with the desired amount of rigidity. As such, the structural layer (30) has a thickness of from 6 microns to 120 microns, more preferably from 10 microns to 50 microns, even more preferably from 15 microns to 30 microns.

The structural layer (30) preferably has a density of from 850 kg/m³ to 950 kg/m³, more preferably from 875 kg/m³ to 925 kg/m³, and most preferably from 900 kg/m³ to 910 kg/m³. Preferably, the structural layer (30) has an intrinsic viscosity (IV) of not more than 4.5 dl/g, more preferably of not more than 4.0 dl/g and most preferably of not more than 3.5 dl/g. Further, preferably, the structural layer (30) has an intrinsic viscosity (IV) of at least 1.2 dl/g, more preferably of at least 1.5 dl/g, even more preferably of at least 1.8 dl/g and most preferably of at least 2.0 dl/g.

For structural integrity and improved heat transfer during seal forming, the structural layer (30) comprises a matrix phase and at least one dispersed phase. Each phase contributes differently to the mechanical and thermal properties of the structural layer (30). For instance, the matrix phase typically provides a high melting point, preferably of at least 140 °C, more preferably at least 150 °C, most preferably at least 160 °C, which results in improved structural integrity during seam forming. The dispersed phase typically provides regions that soften, or even melt, at a lower temperature and hence provide improved heat transfer through the structural layer (30) during seam forming.

The matrix phase of the structural layer (30) preferably comprises a polymer comprising at least 80 %, more preferably 90 %, even more preferably 95 %, still more preferably 98 % by weight of a single monomer. Preferably, the monomer is propylene. Most preferably, the polymer of the matrix phase is a polypropylene homopolymer. Isotactic polypropylene, having at least 90 %, more preferably 93 %, even more preferably 95 %, most preferably 99 % by weight pendant groups, is preferred. The use of such polymers in the matrix phase improves the stiffness of the structural layer (30), and hence also the multilayer film (10). Preferably, the polymer has an intrinsic viscosity (IV) of not more than 4.5 dl/g, more preferably of not more than 4.0 dl/g and most preferably of not more than 3.5 dl/g. Further, preferably, the polymer has an intrinsic viscosity (IV) of at least 1.5 dl/g, more preferably of at least 1.8 dl/g and most preferably of at least 2.0 dl/g. Preferably, the matrix phase is semi-crystalline, having a crystallization peak, as measured by differential scanning calorimetry (DSC), of at least 140 °C, more preferably at least 150 °C, most preferably at least 155 °C. Such matrix phases are able to maintain the structural integrity of the structural layer (30) at the temperatures applied during seal forming.

Preferably, the polymer of the matrix phase is present in an amount of at least 75 %, more preferably of at least 80.0 %, and most preferably of at least 82.5 % by weight of the structural layer (30), and in an amount of not more than 95 %, more preferably of not more than 92.5 % and most preferably of not more than 90 % by weight of the structural layer (30).

The dispersed phase of the structural layer (30) comprises a heterophasic copolymer, the heterophasic copolymer preferably comprising a first olefin monomer and at least one comonomer. The comonomer is preferably selected from an olefin and mixtures of olefins, with the exclusion of the first olefin monomer. Suitable comonomers are selected from: ethylene, C4-to C20-alpha-olefins, and mixtures thereof. Comonomers selected from: ethylene, C4- to C15-alpha-olefins, and mixtures thereof, are preferred. Comonomers selected from: ethylene, C4- to C10-alpha-olefins, and mixtures thereof are more preferred. Comonomers selected from: ethylene, C4- to C6-alpha-olefins, and mixtures thereof, are even more preferred, since they provide improved heat transfer through the structural layer (30). Ethylene is most preferred as the comonomer, since it provides for both improved heat transfer, and greater compatibility with the first sealing layer (20), when the first sealing layer (20) comprises polyethylene.

The heterophasic copolymer preferably has comonomer content of not more than 50 %, more preferably of not more than 45 % and most preferably of not more than 40 % by weight of the copolymer, and a comonomer content of preferably at least 15 %, more preferably of at least 20 % by weight of the copolymer. More preferably, the heterophasic copolymer is a heterophasic propylene copolymer, having propylene as the first olefin monomer.

For improved heat transfer to the first sealing layer (20), and improved inter-layer bonding, at least one comonomer of the heterophasic polymer is preferably the same as the olefin monomer of the polyolefin of the first sealing layer (20). If other comonomers are present, they are preferably present at lower weight fractions than the olefin monomer of the polyolefin of the first sealing layer (20). Most preferably, the comonomer is ethylene and the polyolefin of the first sealing layer (20) is polyethylene.

The heterophasic copolymer is preferably a random-block copolymer, since it is believed that block polydispersity improves the heat transfer through the structural layer (30). It is believed that at least one of the resultant microphases is able to undergo a phase transition at a lower temperature, improving heat-conduction through the structural layer (30), even as the matrix phase continues to provide structural integrity at the temperatures applied during seal forming.

The structural layer (30) comprises not more than 25 %, preferably not more than 20 % and more preferably not more than 17.5 % by weight of the heterophasic copolymer, and at least 5.0 %, preferably is at least 7.5 % and more preferably is at least 10 % by weight of the heterophasic copolymer, as determined as xylene solubles (XS). Preferably, the intrinsic viscosity (IV) of heterophasic copolymer is at least 0.8 dl/g, more preferably is at least 1.0 dl/g, and most preferably is at least 1.2 dl/g, the heterophasic copolymer being separated as the xylene soluble fraction as described above. Further, preferably, the intrinsic viscosity (IV) of the heterophasic copolymer is not more than 2.5 dl/g, more preferably is not more than 2.3 dl/g and most preferably is not more than 2.1 dl/g, the heterophasic copolymer being separated as the xylene soluble fraction as described above. The ratio IV (heterophasic copolymer) / IV (polymer of the matrix phase) is preferably not higher than 0.85 and more preferably not higher than 0.80.

The heterophasic copolymer is comprised within the dispersed phase. Preferably, the dispersed phase is in the form of a microphase, having a weight average particle size of less than 1.00 micron, more preferably less than 0.50 micron. Preferably, the dispersed phase has a weight average particle size of at least 0.05 microns, more preferably of at least 0.10 microns. The weight average particle size of the dispersed phase can be determined using the method described in the paper " Characterization of Modified Polypropylene by Scanning Electron Microscopy" by Pölt P, Ingolic E, Gahleitner M, Bernreitner K, Geymayer W, J. Appl. Polym. Sci. 78, (2000), 1152 ff.

A suitable composition usable as a structural layer (30), and a process for its production is described in EP 1 661 935 .

### 1.3 Optional layers:

The multilayer film (10) may also contain additional layers, so long as the first sealing layer (20) forms an outer layer of the multilayer film (10). For improved processibility, the multilayer film (10) typically comprises three, five, or seven layers that are disposed symmetrically, preferably with the structural layer (30) as the central layer. The additional layers can provide a variety of benefits, including improved mechanical properties, improved barrier properties, improved print robustness, improved bonding between the structural layer (30) and the first sealing layer (20), and mixtures thereof.

The multilayer film (10) comprises a second sealing layer (40), such that the first sealing layer (20) and second sealing layer (40) form the outer layers of the multilayer film (10). When the second sealing layer (40) is present, the first sealing layer (20), structural layer (30), and second sealing layer (40) are preferably co-extruded together with the structural layer (30) in between the first sealing layer (20) and the second sealing layer (40). Alternatively, the second sealing layer can be laminated to the adjacent layer of the multilayer film (10). The composition of the first sealing layer (20) and second sealing layer (40) may be different, particularly when the first sealing layer (20) and second sealing layer (40) are not intended to be fused together, or when different properties are required for the first sealing layer (20) and second sealing layer (40). For instance, when the first sealing layer forms the interior surface of the package, a dye may be added to enhance the visual perception of the contents.

Alternatively, in order to maximize the seal strength between the first sealing layer (20) and second sealing layer (40), the second sealing layer (40) comprises the same polyolefin as present in the first sealing layer (20). More preferably, the second sealing layer (40) has the same composition as the first sealing layer (20). The thickness of the second sealing layer (40) is typically in the range of from 8 microns to 55 microns, preferably from 10 microns to 45 microns, more preferably from 15 microns to 30 microns.

The first sealing layer (20) and second sealing layer (40), if present, may be treated as necessary, to modify the slip properties, enhanced print ability, or for any other suitable reason, for instance with a coating. The treatments applied to the first sealing layer (20) and second sealing layer (40) may be different.

The multilayer film (10) can be combined with a lamination layer (50). A lamination layer (50) is typically added to provide improvements in: vapour or liquid barrier properties, texture (haptics), seal properties, wear resistance, print protection, mechanical strength, and mixtures thereof. As such, the lamination layer (50) typically forms an outer layer to the multilayer film (10). While the lamination layer (50) can have the same composition as the first sealing layer (20) or the structural layer (30), the lamination layer (50) typically has a different composition, dependent on the desired improvement. The lamination layer (50) typically comprises: polyethylene, polypropylene, polyethylene terephthalate, nylon, and mixtures thereof, though polyethylene is preferred. The lamination layer (50) may be extrusion laminated onto the adjacent multilayer film (10) layer, or connected using a tie layer (70), such as: a hot melt adhesive, polyolefin, and mixtures thereof.

Where the lamination layer (50) comprises a polyolefin selected from the group consisting of: polyethylene, polypropylene, and mixtures thereof, preferably polyethylene, the lamination layer (50) can also be used as a sealing layer. This is particularly useful when a lamination layer is required for both print protection, and also to form part of a seal. For instance, the multilayer film (10) can comprise a first sealing layer (20), and a printing layer (80), coextruded to either side of a structural layer (30). To protect a print layer (62) printed onto the printing layer (80), a lamination layer (50) comprising polyethylene can be bonded to the printing layer of the multilayer film (10), using a hot-melt adhesive tie-layer (70). Since the lamination layer comprises polyethylene, it can also be used to form a seal of a package. This is particularly useful when forming packages with a printed design, when the package also comprises a closed gusset seal (130), since the seal is formed using both sides of the laminated multilayer film.

A tie-layer may be included to improve the bond quality between the coextruded layers. Tie-layers (70) are particularly useful for improving the bond quality between partially or fully incompatible layers, e.g., when the structural layer (30) and the first sealing layer (20) are at least partially incompatible. Preferably, the tie-layer (70) is in direct contact with at least one, more preferably both of the adjacent surfaces of the layers to be bound together. The tie-layer (70) may comprise at least one of the materials used to form at least one of the layers to be connected by the tie-layer (70). For instance, if a tie-layer (70) is used to connect a polyethylene lamination layer (50) to a structural layer (30) that comprises polypropylene and a heterophasic copolymer, the tie-layer (70) may comprise polyethylene, or a blend of polyethylene and polypropylene.

For improved heat transfer, if any optional layers are present, they are thin, preferably having a thickness in the range of from 0.2 microns to 50 microns, more preferably in the range of from 0.5 microns to 30 microns, even more preferably in the range of from 2.5 microns to 12 microns, most preferably in the range of from 3 microns to 6 microns. However, for thin multilayer films, the optional layers may have a thickness of 0.5 microns to 4 microns, or 1 micron to 2 microns.

### 1.4 Optional additives:

One or more layers of the multilayer film (10) may further contain one or more additives. Examples of useful additives include, but are not limited to, opacifying agents, pigments, colorants, cavitating agents, slip agents, antioxidants, anti-fog agents, anti-static agents, anti-block agents, moisture barrier additives, gas barrier additives, hydrocarbon resins, hydrocarbon waxes, fillers such as calcium carbonate, diatomaceous earth and carbon black, and combinations thereof. Such additives may be used in effective amounts, which vary depending upon the property required.

### 2. A package comprising the multilayer film:

The package (100) comprising the multilayer film (10) comprises at least one seal formed from fusing together the first sealing layer (20) of two sections of the multilayer film (10), wherein the seal is selected from the group consisting of: a vertical edge overlap seal (110), an open gusset seal (120), a closed gusset seal (130), a vertical corner seal (140), and mixtures thereof. Preferably, the seal has a seal strength of from 0.5 to 5 N/mm, more preferably from 1.0 to 3.3 N/mm.

The package (100) of the present invention can be any suitable shape and size. Such packages are suitable for containing both liquids and solid compositions, though their use for containing granular solids is preferred. The packages of the present invention are also suitable for multiple count products such as diapers.

To form the package (100), the edges of the multilayer film (10) must be sealed sufficiently so as to prevent significant leakage of the contents. However, small perforations in the package (100) are preferred, for instance, to avoid the package from bursting under mechanical pressure. Alternatively, the package (100) may be hermetically sealed. Hermetically sealed packages can comprise air or an inert gas to cushion and prevent damage to the contained product, and optionally to maintain the freshness of the contained product. Suitable inert gases include nitrogen.

The vertical (machine direction) edges of the package (100) are typically sealed using a vertical edge overlap seal (110). The top and bottom of the package (100) comprise horizontal seals. Horizontal seals can be non-gusseted, resulting in a pillow-like package. However, gusseted packages are preferred for their increased volume and improved shelf impression, since they have a three dimensional structure that can be free standing. Gusseted packages can have open gussets (120). However, closed gusseted (130) are preferred, since they provide flatter front, back and side surfaces for improved aesthetics, and can be more easily lifted by placing the fingers beneath the closed gusset (130).

A means for forming vertical edge overlap seals (110), vertical corner seals (140), and horizontal seals, including open gusseted seals (120) and closed gusseted seals (130), is included herein.

The package (100) can further comprise an opening feature. As used herein, the term "opening feature" is defined as an aid to opening of the package (100) that includes a weakening of a selected opening trajectory on the multilayer film (10). Two examples of such opening features are lines of weakness, and die cut dispensing openings with labels.

The line of weakness (150) typically comprises a series of points of weakness (152), separated by points of high mechanical strength (154). The line of weakness (150) is configured to remain intact until opened by the consumer along an opening trajectory (156). The line of weakness (150) can be formed, for example, from a line of scores that partially cut through the multilayer film (10) of the package (100) or a line of perforations that completely cut through the multilayer film (10) of the package (100). The line of weakness can be produced using methods including scoring and perforation. The scoring or perforation may be performed using a laser or by mechanical means. The methods and method parameters used to produce the line of weakness (150) in a multilayer film (10) are known to those skilled in the art.

Surprisingly, the incorporation of a heterophasic copolymer into a structural layer, results in the film of the present invention having excellent tear properties along the line of weakness (150). For instance, while typical polyethylene-polyethylene terepthalate (PET)-polyethylene trilaminate films provide excellent sealing, when the seal is formed at high temperatures, a tear will follow a random course, instead of along the line of weakness formed by perforations.

One method of making a line of weakness uses at least one laser. First a laser beam with sufficient wattage to evaporate a portion of the film material is focused onto the multilayer film (10). The use of laser technology allows for very accurate control of the depth of penetration from very slight scoring to complete perforation of the thin film. A laser using any form of electromagnetic radiation can be used. Suitable lasers for making lines of weakness in thin films include those based on CO₂ gas.

Another suitable method for producing the lines of weakness is the use of blades. The blades are typically installed on a cylinder, which is mounted directly on the film processing machinery so that the cuts are made prior to formation of the package (100) as the multilayer film (10) travels past the blade-equipped cylinder Different blade patterns can be used to get different patterns in the line of weakness. The pressure applied to the blades is also varied during the process to control the dimensions and depth of the cuts to ensure the package (100) opens easily.

Embossing is another alternative method for producing lines of weakness. The embossing technology weakens the multilayer film (10) in specific areas by means of pressure, temperature, processing time, or a deforming profile. The desired results are achieved by changing the caliper and/or material structure at the embossing trajectory. The basic equipment used for embossing consists of a sealing jaw capable of pressing against a back plate. A deforming profile or pattern is fixed to the jaw and heated. The multilayer film (10) is pressed between the deforming profile and the back plate. The main variables known to affect this process are: heating temperature, cooling temperature, pressure, heating time, cooling time, film tension while embossing, film tension after embossing, back plate material, back plate thickness, back plate temperature, jaw pattern and jaw thickness. The embossing unit is typically installed after an unwinding station of the thin film and could be incorporated into the packaging production line. EP 1 409 366 describes methods of producing lines of weakness.

The line of weakness (150) may be characterized using the following test methods: a) ASTM D-882 Standard Test Method for Tensile Properties on Thin Plastic Sheeting and b) ASTM D-5733 Standard Test Method for Tearing Strength of Nonwoven Fabrics by the Trapezoidal Procedure. The line of weakness (150) may be characterized by three parameter values obtained from these standard tests. The first is yield stress value. The yield stress value of the multilayer film with a line of weakness, as measured by ASTM D-882, is preferably no less than 90% of the yield stress value of the multilayer film (10) without a line of weakness. Second, the final or rupture stress value of the multilayer film (10) with the line of weakness is preferably no lower than 90% of the yield stress value of the multilayer film (10) without the line of weakness. Third, the average trapezoidal tearing force, according to ASTM D-5733, of the multilayer film (10) with the line of weakness is preferably less than 4 kilograms of force.

### 3. Process for making a package:

Since the multilayer film (10) of the present invention enables sealing at lower temperatures, the process for forming the seal can be more flexible. In comparison to multilayer films of the prior art, less sealing time is required for the same sealing temperature and pressure, to form a seal of the same quality. Alternatively, a lower temperature is required for the same sealing time and sealing pressure, or a lower pressure is required for the same sealing temperature and sealing time, to achieve the same seal quality. Hence packages comprising the film can be made at higher throughputs, with less damage to the film surface. A package (100) comprising the multilayer film (10) of the present invention can be made with a process that comprises the following steps: taking a first section of multilayer film (10) and a second section of multilayer film (10); contacting the first sealing layer (20) of the first section of multilayer film (10) with the first sealing layer (20) of the second section of multilayer film (10); applying a heat source to the first section of multilayer film (10) and second section of multilayer film (10), to fuse the first sealing layer (20) of the first section of multilayer film (10) with the first sealing layer (20) of the second section of multilayer film (10), to form a seal; characterized in that the heat source is at a temperature of from 160 °C to 300 °C, more preferably from 165 °C to 260 °C, even more preferably from 170 °C to 220 °C, above the melt point of the first sealing layer (20).

The package (100) according to the present invention can be continually made from the multilayer film (10), for instance in a vertical form fill (VFFS) converting machine. The multilayer film (10) is typically folded onto itself, for instance using a forming shoulder, with a vertical edge overlap so as to form a multilayer film (10) tube. Preferably, the vertical edge overlap is from 2 mm to 30 mm, more preferably from 4 mm to 15 mm.

The vertical edge overlap is then sealed to form a vertical edge overlap seal (110). The vertical edge overlap seal (110) is applied using the vertical sealer, typically comprising a sealing head provided with a heating element and a backing member, with the backing member aligned vertically, behind the vertical edge overlap. The sealing process involves a heat source, such as permanently heated sealing bars or rollers. Alternatively, the heat source may provide impulse heating. Heat is applied to the vertical edge overlap by the vertical sealer, to fuse the overlapping first sealing layers (20) together. To form a strong vertical edge overlap seal (110), a pressure that is sufficient to ensure good thermal contact between the first sealing layers (20) is preferred. Preferably, a temperature of from 160 °C to 300 °C, more preferably from 165 °C to 260 °C, even more preferably from 170 °C to 220 °C is applied to the multilayer film (10) by the heat source. To make a vertical edge overlap seal (110) using the multilayer film (10) of the present invention, the temperature is preferably applied by the heat source for a duration of from 35 ms to 100 ms, more preferably from 40 ms to 80 ms, most preferably from 50 ms to 70 ms. The vertical edge overlap seal (110) is formed upon cooling of the combined sealing layer. The rate of cooling can be increased by the application of cooling, for instance via air convection.

If desired, vertical corner seals (140) can also be formed into the package (100). Vertical corner seals (140) are typically formed prior to, or at the same time as the vertical edge overlap seal. A vertical corner seal (140) comprises a vertical section of the multilayer film (10) that is folded in on itself to form a vertical section having two layers of multilayer film (10). Preferably, the width of the fold is from 2 mm to 20 mm, more preferably from 5mm to 10 mm. The two layers of multilayer film (10) are then passed in between a vertical sealer, typically comprising a heat source, such as a heating element and a backing member. Heat, and preferably pressure, is applied to the fold by the vertical sealer, to fuse the overlapping first sealing layers (20) together. To form a strong vertical corner seal (140), a pressure that is sufficient to ensure good thermal contact between the first sealing layers (20) is preferred. Preferably, a temperature of from 160 °C to 300 °C, more preferably from 165 °C to 260 °C, even more preferably from 170 °C to 220 °C is applied to the multilayer film (10) by the heat source. To make a vertical corner seal (140) using the multilayer film (10) of the present invention, the temperature is preferably applied by the heat source for a duration of from 30 ms to 120 ms, more preferably from 40 ms to 80 ms, most preferably from 50 ms to 70 ms. The vertical corner seal (140) is formed upon cooling of the combined sealing layer. The rate of cooling can be increased, for instance via air convection, or the application of chilled rollers.

A horizontal sealing jaw assembly, positioned below the filling location, is typically used to form a horizontal (transverse direction) seal across the multilayer film (10). The horizontal sealing jaw assembly comprises a sealing head with a heat source, and typically electrical impulse sealing wire element to sever the multilayer film (10) as well as to form the horizontal top seal of the preceding package (100), and a horizontal bottom seal for the proceeding package (100) being formed herein.

Prior to the horizontal sealing operation, the multilayer film (10) material may be gusset folded at the position where the horizontal seals are to be applied. This is typically done using pushing devices having a triangular shape.

To form an open gusset seal (120), only the first sealing layers (20) are combined together, such that the resultant seal comprises two layers of multilayer film (10) in the seal. If the multilayer film (10) also comprises a second sealing layer (40), or a lamination layer (50) that is suitable for use as a sealing layer, a closed gusset seal (130) can optionally be formed. To form a closed gusset seal (130), sections of the second sealing layer (40) are also sealed together, such that the resultant seal comprises four layers of multilayer film (10) in at least part of the seal. To form a strong gusset seal, a pressure that is sufficient to ensure good thermal contact between the first sealing layers (20) is preferred. If a closed gusset seal (130) is formed, a pressure that is sufficient to ensure good thermal contact between the second sealing layer (40) as well, is preferred. Preferably, a temperature of from 160 °C to 300 °C, more preferably from 165 °C to 260 °C, even more preferably from 170 °C to 220 °C is applied to the multilayer film (10) by the heating element, to fuse the respective sealing layers. To make an open gusset seal (120) or a closed gusset seal (130), using the multilayer film (10) of the present invention, the temperature is preferably applied by the heat source for a duration of from 40 ms to 120 ms, more preferably from 45 ms to 80 ms, most preferably from 50 ms to 70 ms. The gusset seal is formed upon cooling of the combined sealing layer.

After the horizontal bottom seal is formed, the package (100) is typically filled. The horizontal top seal is then applied. Optionally, the horizontal top seal may also include a gusset formation. The package (100) is formed by severing the multilayer film (10) above the horizontal top seal, typically at the same time as the horizontal top seal is formed.

### Methods:

### 1) Meltpoint:

The meltpoint of the polymer or resin is measured using Differential Scanning Calometry ("DSC") is described as follows: From 6 mg to 10 mg of a sheet of the polymer, polymer composition, or resin, is pressed at 200 °C and removed with a punch die. The sample is annealed at room temperature for at least 2 weeks. At the end of this period, the sample is placed in a Differential Scanning Calorimeter (TA Instruments Model 2920 DSC) and cooled to -50 °C.

The sample is heated at a rate of 20°C/min to attain a final temperature of 220 °C. The thermal output is a measure of the heat of fusion (measured in Joules per gram of polymer) and is recorded as the area under the melting peak of the sample which is typically peaked at from 30 °C to 175 °C, and occurs between the temperatures of from 0 °C and 200 °C. The melting point is recorded as the temperature of the greatest heat absorption within the range of melting of the sample.

### 2) Xylene solubles (XS, wt%)

2.0 g of polymer is dissolved in 250 ml p-xylene at 135 °C under agitation. After 30 minutes the solution is allowed to cool for 15 minutes at ambient temperature and then allowed to settle for 30 minutes at 25 °C. The solution is filtered with filter paper into two 100 ml flasks.

The solution from the first 100 ml vessel is evaporated in nitrogen flow and the residue is dried under vacuum at 90 °C until constant weight is reached.

XS% = (100*m*Vₒ)/(mₒ*v); mₒ = initial polymer amount (g); m = weight of residue (g); Vₒ = initial volume (ml); v = volume of analysed sample (ml).

### 3) Comonomer content

This is measured with Fourier transform infrared spectroscopy (FTIR) calibrated with ¹³C-NMR. When measuring the ethylene content in polypropylene, a thin film of the sample (thickness about 250 microns) was prepared by hot-pressing. The area of -CH₂- absorption peak (800-650 cm⁻¹) is measured with Perkin Elmer FTIR 1600 spectrometer. The method is calibrated using ethylene content data measured by ¹³C-NMR.

### 4) Density:

Density of the polymers is measured according to ISO 1183/D, 2004 on compression moulded specimens.

### 5) Intrinsic viscosity:

This is measured according to DIN ISO 1628/1, October 1999 in decalin at 135°C.

### 6) Seal strength:

This is measured according to ISO 527 (08-1995), using a sample width of 25.4mm, test speed of 500mm/min, grip distance of 50mm.

### 7) Hermetic sealing:

Empty packages comprising the seal to be tested were made. The packages were were filled with air and sealed. Twenty packages were put under water at 20.3 cmHg vacuum for 60 seconds. If no bubbles were observed from all 20 of the submersed packages, the seal was considered a hermetic seal under the test conditions. If even one of the twenty packages bubbled, the seal was not hermetic. Where the package comprises perforations, for instance for a line of weakness (150) or vent perforations, these perforations are taped over before the test.

### 8) Drop test:

The drop test is done at least 10 minutes after the package has been produced. The package is checked for leaks from any of the seals, before the drop test.

The package is supported, at a height of 1 m above a rigid horizontal surface, such that the front face panel is facing the ground. The front face panel is the panel which would normally be facing the consumer when on a supermarket shelf. The package is dropped so that the front face panel of the package hits the rigid horizontal surface.

After the drop test, the package is checked for leakage from any of the seals. A totally of 30 packages are dropped. For all the packages, no powder/dust should escape from the sealed pack after dropping, and the seals must remain intact.

### Examples:

Example 1: The following multilayer film was formed by coextrusion of the first sealing layer, the structural layer, and the printing layer. A green print layer was applied to the printing layer, before a lamination layer was applied, using a polyurethane lamination adhesive tie-layer, forming a laminated multilayer film having a total thickness of 131 microns. The resultant laminated multilayer film had a width of 450 mm, and was used to produce packages of the present invention:

| Film of example 1 | Thickness | Composition |
|---|---|---|
| First sealing layer | 25 microns | (L)LDPE (1) |
| Structural layer(2) | 50 microns | 40 wt% heterophasic copolymer blend(3) |
| | | 25 wt% mLLDPE(4) |
| | | 20 wt% LDPE(5) |
| | | 15 wt% master-batch (6) |
| Printing layer | 25 microns | (L)LDPE (1) |
| Tie-layer | 2 microns | Polyurethane lamination adhesive |
| Lamination layer (7) | 29 microns | 7 micron LDPE |
| | | 15 micron LLDPE |
| | | 7 micron LLDPE |

| | | |
|---|---|---|
| (1) blend of linear low density polyethylene and low density polyethylene (2) formed by melting and blending the different materials together (3) BC918CF, ex Borealis (4) metallocene linear low density polyethylene (5) Low density polyethylene (6) 50% titanium dioxide and 50% LDPE (7) formed by coextrusion of the layers in the order shown | | |

A vertical form fill (VFFS) converting machine was set up to form the packages. The vertical form fill machine had two stations, one on top of the other for forming, filling and closing the package. The multilayer film is first formed into a tube over a forming shoulder. The vertical edge overlap seal and the vertical corner seals were then applied, as well as the bottom closed gusset seal, on the upper station in one step. The film was then transported downwards to the second station, where the package was filled with 1.35 Kg of dry laundry powder, added into the open package from the top. The top closed gusset seal was then applied at the lower station. The package was then formed into a more cubic size appearance by folding down the upper part of the package in a proceeding step.

The package comprised a vertical edge overlap seal having a width of 3 mm, four vertical corner seals of width 5 mm each, and closed gusset end seals (both top and bottom) of height 10 mm. The resulting package dimensions were: 130mm width, 220mm height, and 65mm depth. The packages were filled to a height of 130mm.

The packages were drop tested to assess their seal strength. The following combinations of applied sealing temperatures (temperature of the heat source) and applied sealing times, to form the seals, resulted in packages that passed the drop test. All other variables were kept constant.

| | Example package 1A | Example package 1B |
|---|---|---|
| Vertical edge overlap seal | | |
| Temperature of the heat source | 270 °C | 300 °C |
| Applied sealing time | 50 ms | 35 ms |
| Closed gusset seal | | |
| Temperature of the heat source | 180 °C | 180 °C |
| Applied sealing time | 40 ms | 40 ms |

| | Example package 1D | Example package 1E |
|---|---|---|
| Vertical corner seal | | |
| Temperature of the heat source | 230 °C | 220 °C |
| Applied sealing time | 50 ms | 80 ms |

Example 2: The multilayer film was formed as in Example 1, except that the first sealing layer and printing layer were 17.5 microns thick, and the structural layer had a thickness of 35 microns. The resultant laminated multilayer film had a thickness of 101 microns. As before, the laminated multilayer film had a width of 450 mm, and was used to produce packages of the present invention, using the same procedure as used for making the packages of example 1.

As with example 1, the packages had dimensions of: 130mm width, 220mm height, and 65mm depth, and were filled with 1.35 Kg of dry laundry to a height of 130mm. The package comprised a vertical edge overlap seal having a width of 3 mm, four vertical corner seals of width 5 mm each, and closed gusset end seals (both top and bottom) of height 10 mm.

The packages were drop tested to assess their seal strength. The following combinations of applied sealing temperatures (temperature of the heat source) and applied sealing times, to form the vertical seals, resulted in packages that passed the drop test. All other variables were kept constant.

| | Example package 2A | Example package 2B |
|---|---|---|
| Vertical corner seal | | |
| Temperature of the heat source | 180 °C | 240 °C |
| Applied sealing time | 80 ms | 65 ms |

Example 3: The multilayer film was formed as in Example 1, except that the first sealing layer and printing layer were 12.5 microns thick, and the structural layer had a thickness of 25 microns. The resultant laminated multilayer film had a thickness of 81 microns. As before, the laminated multilayer film had a width of 450 mm, and was used to produce packages of the present invention, using the same procedure as used for making the packages of example 1.

As with example 1, the packages had dimensions of: 130mm width, 220mm height, and 65mm depth, and were filled with 1.35 Kg of dry laundry to a height of 130mm. The package comprised a vertical edge overlap seal having a width of 3 mm, four vertical corner seals of width 5 mm each, and closed gusset end seals (both top and bottom) of height 10 mm.

The packages were drop tested to assess their seal strength. The following combinations of applied sealing temperatures (temperature of the heat source) and applied sealing times, to form the vertical seals, resulted in packages that passed the drop test. All other variables were kept constant.

| | Example package 3A | Example package 3B |
|---|---|---|
| Vertical corner seal | | |
| Temperature of the heat source | 200 °C | 230 °C |
| Applied sealing time | 50 ms | 30 ms |

Example 4: As with the laminated multilayer film of Example 1, the following multilayer film was formed by coextrusion of the first sealing layer, the structural layer, and the printing layer. A green print layer was applied to the printing layer, before a lamination layer was applied, using a polyurethane lamination adhesive tie-layer, forming a laminated multilayer film having a total thickness of 131 microns. The resultant laminated multilayer film had a width of 450 mm, and was used to produce packages of the present invention:

| Film of example 4 | Thickness | Composition |
|---|---|---|
| First sealing layer | 25 microns | (L)LDPE (1) |
| Structural layer(2) | 50 microns | 35 wt% heterophasic copolymer blend(8) |
| | | 20 wt% polypropylene homopolymer |
| | | 30 wt% mLLDPE(4) |
| | | 15 wt% master-batch (6) |
| Printing layer | 25 microns | (L)LDPE (1) |
| Tie-layer | 2 microns | Polyurethane lamination adhesive |
| Lamination layer (7) | 29 microns | 7 micron LDPE |
| | | 15 micron LLDPE |
| | | 7 micron LLDPE |

| | | |
|---|---|---|
| (1), (2), (4), (6), (7) are as defined for the film of example 1. (8) Clyrell EP310K, ex Basell | | |

As with example 1, the packages had dimensions of: 130mm width, 220mm height, and 65mm depth, and were filled with 1.35 Kg of dry laundry to a height of 130mm. The package comprised a vertical edge overlap seal having a width of 3 mm, four vertical corner seals of width 5 mm each, and closed gusset end seals (both top and bottom) of height 10 mm.

The packages were drop tested to assess their seal strength. The following combinations of applied sealing temperatures (temperature of the heat source) and applied sealing times, to form the seals, resulted in packages that passed the drop test. All other variables were kept constant.

| | Example package 4A | Example package 4B |
|---|---|---|
| Vertical corner seal | | |
| Temperature of the heat source | 180 °C | 220 °C |
| Applied sealing time | 80 ms | 55 ms |

Example 5: The multilayer film was formed as in Example 4, except that the first sealing layer and printing layer were 17.5 microns thick, and the structural layer had a thickness of 35 microns. The resultant laminated multilayer film had a thickness of 101 microns. As before, the laminated multilayer film had a width of 450 mm, and was used to produce packages of the present invention, using the same procedure as used for making the packages of example 1.

As with example 4, the packages had dimensions of: 130mm width, 220mm height, and 65mm depth, and were filled with 1.35 Kg of dry laundry to a height of 130mm. The package comprised a vertical edge overlap seal having a width of 3 mm, four vertical corner seals of width 5 mm each, and closed gusset end seals (both top and bottom) of height 10 mm.

The packages were drop tested to assess their seal strength. The following combinations of applied sealing temperature (temperature of the heat source) and applied sealing time, to form vertical corner seals, passed the drop test. All other variables were kept constant.

| | Example package 5A | Example package 5B |
|---|---|---|
| Vertical corner seal | | |
| Temperature of the heat source | 180 °C | 240 °C |
| Applied sealing time | 80 ms | 55 ms |

Example 6: The multilayer film was formed as in Example 4, except that the first sealing layer and printing layer were 12.5 microns thick, and the structural layer had a thickness of 25 microns. The resultant laminated multilayer film had a thickness of 81 microns. As before, the laminated multilayer film had a width of 450 mm, and was used to produce packages of the present invention, using the same procedure as used for making the packages of example 1.

As with example 4, the packages had dimensions of: 130mm width, 220mm height, and 65mm depth, and were filled with 1.35 Kg of dry laundry to a height of 130mm. The package comprised a vertical edge overlap seal having a width of 3 mm, four vertical corner seals of width 5 mm each, and closed gusset end seals (both top and bottom) of height 10 mm.

The packages were drop tested to assess their seal strength. The following combination of applied sealing temperature (temperature of the heat source) and applied sealing time, to form vertical corner seals, passed the drop test. All other variables were kept constant.

| | Example package 6A |
|---|---|
| Vertical corner seal | |
| Temperature of the heat source | 180 °C |
| Applied sealing time | 50 ms |

Comparative Example 7: For comparison, packages having the same dimensions as the example packages 1 to 6, including seal dimensions, were made using the following multilayer film of the prior art, the film having a thickness 95 microns:

| Comparative Example 7 | Thickness | Composition |
|---|---|---|
| First sealing layer(7) | 50 microns | 12 micron LLDPE |
| | | 26 micron HDPE + Master-Batch(8) |
| | | 12 micron LDPE |
| Tie-layer | 2 microns | Polyurethane lamination adhesive |
| Structural layer | 12 microns | Oriented PET |
| Tie-layer | 2 microns | Polyurethane lamination adhesive |
| Lamination layer(7) | 29 microns | 7 micron LDPE |
| | | 15 micron LLDPE |
| | | 7 micron LLDPE |

| | | |
|---|---|---|
| (8) 85% HDPE and 15% Master-Batch (50% titanium dioxide and 50% LDPE) | | |

The first sealing layer, and the lamination layer, were both formed by co-extrusion. The first sealing layer and the lamination layer were both bonded to the PET structural layer using a 2 micron layer of polyurethane lamination adhesive.

The combination of applied sealing temperature (temperature of the heat source) and applied sealing time required to form seals that pass the drop test are given below. As before, all other variables were kept constant.

| | Comparative example package 7 |
|---|---|
| Vertical edge overlap seal | |
| Temperature of the heat source | 270 °C |
| Applied sealing time | 60 ms |
| Closed gusset seal | |
| Temperature of the heat source | 230 °C |
| Applied sealing time | 40 ms |
| Vertical corner seal | |
| Temperature of the heat source | 260 °C |
| Applied sealing time | 80 ms |

In contrast to the examples of the present invention, for the film of comparative example 7, either a higher sealing temperature, or longer applied sealing time, is required to form seals that passed the drop test.

For instance, comparing example package 1A to comparative example package 7, using the film of example 1 enables vertical edge overlap seals to be formed using a heat application time of 50 ms at 270 °C, in comparison to 60 ms for packages made with the film of comparative example 7. This is even more surprising since the film of example 1 has a thickness of 131 microns, in comparison to 95 microns for the film of comparative example 7. By raising the temperature of the heat source by 30 °C, a vertical edge overlap seal can be formed using a heat application time of just 35 ms (see example package 1B).

As can be seen from package examples 1A and 1B, closed gusset seals that pass the drop test can be formed at a temperature of 180 °C, using a heat application time of 40 ms. In contrast, using the film of comparative example 7, a temperature of 230 °C is required to form closed gusset seals that pass the drop test, at the same heat application time. Similarly, as can be seen from package example IE, vertical corner seals that pass the drop test can be formed at a temperature of 220 °C, using a heat application time of 80 ms. In contrast, using the film of comparative example 7, a temperature of 260 °C is required to form vertical seals, at the same heat application time. As before, the reduction in applied temperature and heat application time is particularly surprising since the multilayer film of example 1 has a thickness of 131 microns, in comparison to 95 microns for the film of comparative example 7.

As the thickness of the multilayer film is reduced, the temperature and heat application times at which seals can be formed can be further reduced (for instance, for the vertical corner seals of package example 2A in comparison to comparative example 7).

## Claims

1. A package (100) comprising a multilayer film (10), wherein the multilayer film (10) comprises:
a. an outer layer consisting of a first sealing layer (20), the first sealing layer (20) comprising a polyolefin; and
b. a structural layer (30), comprising a matrix phase and a dispersed phase;
wherein:
the dispersed phase comprises a heterophasic copolymer; and
the structural layer (30) has a thickness of from 6 microns to 120 microns;
wherein the package (100) comprises at least one seal formed from fusing together the first sealing layer (20) of two sections of the multilayer film (10), the multilayer film (10) comprises a second sealing layer (40), such that the first sealing layer (20) and second sealing layer (40) form the outer layers of the multilayer film (10), and the seal is a gusset seal, formed from combining at least four layers of the multilayer film (10).

2. The package (100) according to claim 1, wherein the package further comprises a line of weakness (150).

3. A process for making the package (100) according to any of claims 1 to 2, wherein the process comprises the steps of:
a. taking a first section of multilayer film (10) and a second section of multilayer film (10);
b. contacting the first sealing layer (20) of the first section of multilayer film (10) with the first sealing layer (20) of the second section of multilayer film (10);
c. applying a heat source to the first section of multilayer film (10) and second section of multilayer film (10), to fuse the first sealing layer (20) of the first section of multilayer film (10) with the first sealing layer (20) of the second section of multilayer film (10), to form a seal;
**characterized in that** the heat source is at a temperature of from 160 °C to 300 °C.

## Patentansprüche

1. Verpackung (100), umfassend eine Mehrschichtfolie (10), wobei die Mehrschichtfolie (10) umfasst:
a. eine Außenschicht, bestehend aus einer ersten Dichtungsschicht (20), wobei die erste Dichtungsschicht (20) ein Polyolefin umfasst; und
b. eine Strukturschicht (30), umfassend eine Matrixphase und eine dispergierte Phase;
wobei:
die dispergierte Phase ein heterophasisches Copolymer umfasst; und
die Strukturschicht (30) eine Dicke von 6 Mikrometer bis 120 Mikrometer aufweist;
wobei die Verpackung (100) mindestens eine Dichtung umfasst, die durch Verschmelzen der ersten Dichtungsschicht (20) von zwei Abschnitten der Mehrschichtfolie (10) miteinander gebildet wird, die Mehrschichtfolie (10) eine zweite Dichtungsschicht (40) derart umfasst, dass die erste Dichtungsschicht (20) und die zweite Dichtungsschicht (40) die Außenschichten der Mehrschichtfolie (10) bilden, und die Dichtung eine Seitenfaltdichtung ist, die durch Kombinieren von mindestens vier Schichten der Mehrschichtfolie (10) gebildet wird.

2. Verpackung (100) nach Anspruch 1, wobei die Verpackung ferner eine Schwächungslinie (150) umfasst.

3. Verfahren zum Herstellen der Verpackung (100) nach einem der Ansprüche 1 bis 2, wobei das Verfahren die folgenden Schritte umfasst:
a. Nehmen eines ersten Abschnitts von Mehrschichtfolie (10) und eines zweiten Abschnitts von Mehrschichtfolie (10);
b. Inkontaktbringen der ersten Dichtungsschicht (20) des ersten Abschnitts von Mehrschichtfolie (10) mit der ersten Dichtungsschicht (20) des zweiten Abschnitts von Mehrschichtfolie (10);
c. Anwenden einer Wärmequelle auf den ersten Abschnitt von Mehrschichtfolie (10) und den zweiten Abschnitt von Mehrschichtfolie (10), um die erste Dichtungsschicht (20) des ersten Abschnitts von Mehrschichtfolie (10) mit der ersten Dichtungsschicht (20) des zweiten Abschnitts von Mehrschichtfolie (10) zu verschmelzen, um eine Dichtung zu bilden;
**dadurch gekennzeichnet, dass** die Wärmequelle auf einer Temperatur von 160 °C bis 300 °C ist.

## Revendications

1. Conditionnement (100) comprenant un film multicouche (10), dans lequel le film multicouche (10) comprend :
a. une couche externe constituée d'une première couche d'étanchéité (20), la première couche d'étanchéité (20) comprenant une polyoléfine ; et
b. une couche structurale (30), comprenant une phase de matrice et une phase dispersée ;
dans lequel :
la phase dispersée comprend un copolymère hétérophasique ; et
la couche structurale (30) a une épaisseur allant de 6 micromètres à 120 micromètres ;
où le conditionnement (100) comprend au moins un joint formé par la fusion conjointe de la première couche d'étanchéité (20) de deux sections du film multicouche (10), le film multicouche (10) comprend une deuxième couche d'étanchéité (40), de telle sorte que la première couche d'étanchéité (20) et la deuxième couche d'étanchéité (40) forment les couches externes du film multicouche (10), et le joint est un joint à soufflet, formé par la combinaison d'au moins quatre couches du film multicouche (10).

2. Conditionnement (100) selon la revendication 1, où le conditionnement comprend en outre une ligne de faiblesse (150).

3. Procédé de fabrication d'un conditionnement (100) selon l'une quelconque des revendications 1 à 2, où le procédé comprend les étapes consistant à :
a. prendre une première section de film multicouche (10) et une deuxième section de film multicouche (10) ;
b. mettre en contact la première couche d'étanchéité (20) de la première section de film multicouche (10) avec la première couche d'étanchéité (20) de la deuxième section de film multicouche (10) ;
c. appliquer une source de chaleur à la première section de film multicouche (10) et à la deuxième section de film multicouche (10), pour fondre la première couche d'étanchéité (20) de la première section de film multicouche (10) avec la première couche d'étanchéité (20) de la deuxième section de film multicouche (10), de façon à former un joint ;
**caractérisé en ce que** la source de chaleur est à une température allant de 160 °C à 300 °C.
